# FASCICULE DE BREVET EUROPEEN

(11) **EP 0 693 022 B1**
(45) Date de publication et mention de la délivrance du brevet: **11.11.1998**
(21) Numéro de dépôt: 95909000.2
(22) Date de dépôt: 09.02.1995
(51) Int. Cl.: B29B 17/00, B29B 13/02, F27B 9/06

(54) **DISPOSITIF DE REDENSIFICATION DE POLYSTYRENE EXPANSE**
VORRICHTUNG ZUR VERDICHTUNG VON POLYSTYRENSCHAUM
DEVICE FOR REDENSIFYING EXPANDED POLYSTYRENE

(30) Priorité: 09.02.1994 FR 9401660
(43) Date de publication de la demande: 24.01.1996
(73) Titulaire: Prodao, 62200 Boulogne-sur-Mer (FR)
(72) Inventeur: JENNEQUIN, Alain, F-62200 Boulogne-sur-Mer (FR); DHALEINE, Eric, F-62360 Hesdigneul (FR); DUEZ, Nicolas, F-62200 Boulogne-sur-Mer (FR); POLAN, Stanislas, F-62190 Lillers (FR)
(74) Mandataire: Hénnion, Jean-Claude
(86) Numéro de dépôt international: FR9500152
(87) Numéro de publication internationale: WO9521731

(56) Documents cités:
- DE-A- 3 420 132
- DE-U- 9 116 197
- GB-A- 2 139 554
- US-A- 3 752 631
- US-A- 4 894 517

## Description

La présente invention concerne la redensification d'articles en résine thermoplastique expansée et notamment en polystyrène de manière à rendre ces articles moins encombrants et plus facilement manipulables voire réutilisables. Elle concerne plus particulièrement un dispositif dans lequel la redensification est obtenue par chauffage par rayonnement infrarouge.

L'usage d'articles moulés en résine thermoplastique expansée est de plus en plus fréquent dans le domaine des emballages, notamment s'agissant d'emballages pour appareils devant résister aux chocs ou encore de produits devant être isolés, notamment de produits alimentaires. Le recyclage de tels articles pose un très gros problème de transport compte tenu de leur très faible densité. On sait notamment que le polystyrène expansé a une densité qui est de l'ordre de 0,01.

On a déjà proposé de réduire le volume de tels articles par compactage, mais compte tenu de l'élasticité du thermoplastique, la réduction du volume est limitée.

On a également proposé de redensifier lesdits articles en les soumettant à un chauffage par rayonnement infrarouge. Un dispositif basé sur ce principe est décrit notamment dans le document US A 4,894,517. Ce dispositif comporte une chambre de chauffage qui est traversée par un tapis transporteur et qui comprend des moyens de chauffage infrarouge qui sont disposés au-dessus dudit tapis transporteur.

Les articles en résine thermoplastique expansée, notamment en polystyrène, qui sont disposés sur le tapis transporteur passent sous les lampes infrarouges qui ont une longueur d'ondes prédéterminée, normalement de 3 à 13 µm. L'action du rayonnement infrarouge provoque un retrait en volume de l'article et donc une augmentation corrélative de sa densité.

Le dispositif décrit dans ce document US-A 4,894,517 est destiné, semble-t-il, aux articles de grande dimension qui se présentent sous la forme de blocs compacts que l'on veut réduire en une plaque de petite dimension rigide.

Les essais effectués par le demandeur ont permis de constater que ce dispositif ne pouvait convenir lorsque les articles à redensifier étaient de petite dimension, s'agissant notamment de grains obtenus après déchiquetage et broyage d'articles moulés de grande dimension. En effet dans le dispositif décrit dans le document antérieur, le tapis transporteur consiste en une grille, dont les mailles ouvertes permettent le passage du rayonnement infrarouge des moyens de chauffage situés en-dessous du tapis. Dans le cas de grains de petite dimension, obtenus après déchiquetage et broyage d'article moulés, on a inévitablement une perte de grains qui passent à travers les mailles du tapis soit lors de leur alimentation sur le tapis soit en cours de traitement à l'occasion de la diminution de volume.

Le but que s'est fixé le demandeur est de proposer un dispositif de redensification qui pallie l'inconvénient précité, et qui permette de redensifier des articles se présentant sous forme granulaire avec une efficacité maximale du rayonnement infrarouge.

Ce but est parfaitement atteint par le dispositif de l'invention, qui comprend de manière connue une chambre de chauffage, un système de transport des articles à travers la chambre de chauffage, ainsi que des moyens de chauffage infrarouge disposés dans la chambre de chauffage en regard dudit système de transport.

De manière caractéristique le système de transport comporte une surface continue métallique réfléchissante, sur laquelle se déplacent les grains. Cette surface ne laisse bien sûr pas passer les grains quelle que soit leur taille. Grâce à son caractère réfléchissant, la surface métallique du système de transport constitue un réflecteur continu dans la chambre de chauffage. De plus, les grains, même lorsqu'il se produit certaines fusions de la résine thermoplastique, n'adhèrent pas de manière significative à ladite surface métallique. Par ailleurs, le dispositif de l'invention comporte une chambre de post-chauffage, qui est exempte de moyens de chauffage infrarouge, mais qui comporte un réflecteur disposé au-dessus de et tourné vers la surface métallique réfléchissante du système de trasnport.

Bien que cette chambre de post-chauffage ne comporte pas de moyens de production du rayonnement infrarouge, on constate cependant une poursuite du phénomène de rétraction des grains de matière, qui est due à la restitution de chaleur emmagasinée par la surface métallique formant le système de transport lors de son passage dans la chambre de chauffage. Le réflecteur permet donc une meilleure concentration de cette chaleur restituée.

Certes on connaît par le document DE-U-91 16 197 un dispositif pour réduire le volume d'objets, en particulier de gobelets en polystyrène, qui comporte une chambre de chauffage traversée par un système de transport constitué de bandes articulées d'un métal réfléchissant tel que l'aluminium. Cependant dans ce document DE-U-91 16 197, il n'est pas question d'articles en polystyrène expansé, et encore moins d'articles se présentant sous forme granulaire ; il n'est pas explicitement prévu que les moyens de chauffage soient des moyens de chauffage infrarouge ; enfin le dispositif en question ne comporte pas de chambre de post-chauffage.

Selon une version préférée, le système de transport comporte un tapis transporteur, constitué à partir d'une fine bande continue métallique réfléchissante. Cette bande métallique est suffisamment flexible pour pouvoir être tendue, sous forme d'une boucle, entre différents tambours et entraînée en rotation pour assurer le déplacement des grains.

Avantageusement, la bande constitutive du tapis transporteur est une tôle fine en acier doux recouverte d'étain, couramment désigné sous la dénomination fer blanc. Ce type de matériau est couramment utilisé dans la fabrication des boîtes de conserve et présente un prix très faible, au regard des grilles métalliques ou des grilles en fibre de verre, recouvertes de polytétrafluoréthylène préconisées par le document US-A 4,894,517, ou encore des bandes articulées en aluminium du document DE-U-91 16 197.

La mise en forme de boucle continue de la bande métallique est obtenue par recouvrement des deux extrémités libres de cette bande et rivetage des bords superposés. Le rivetage est préféré à la soudure dans la mesure où cela permet d'encaisser les variations dimensionnelles en largeur du tapis provoquées par la dilatation du métal sous l'effet de la chaleur.

Selon une autre version, le système de transport des grains à travers la chambre de chauffage et la chambre de post-chauffage comporte une plaque métallique à surface réfléchissante et des moyens de mise en vibration de ladite plaque. Ainsi le déplacement des grains est réalisé grâce aux mouvements de vibration de la plaque, qui est de préférence légèrement inclinée pour favoriser ce déplacement.

De préférence, s'agissant de la redensification d'articles en résine thermoplastique expansée à l'état granulaire, le dispositif comporte , en amont de la chambre de chauffage,un tapis d'alimentation et une trémie ouverte sur ledit tapis et qui présente une ouverture contrôlée d'alimentation , régulant le volume de grains véhiculé sur le tapis ; de plus il comporte des flasques latéraux disposés au-dessus du tapis et affleurant celui-ci depuis l'ouverture d'alimentation de la trémie.

Grâce à cette disposition particulière, il est possible d'accumuler sur le tapis d'alimentation et de faire rentrer dans la chambre de chauffage un volume régulé et homogène en section de grains à redensifier.

Dans le cas où le tapis transporteur est une bande métallique en boucle continue, celle-ci peut faire office également de tapis d'alimentation. Par contre dans le cas où le système de transport comporte une plaque métallique en vibration, il faut un tapis d'alimentation indépendant qui permet de déposer les grains sur la plaque métallique, en amont de la chambre de chauffage.

De préférence le dispositif de l'invention comporte également des déflecteurs disposés au-dessus de la surface métallique et affleurant celle-ci, dirigés obliquement depuis son bord extérieur vers sa zone médiane, de manière à regrouper les grains en cours de redensification vers ladite zone médiane au cours de leur déplacement. Dans ce cas, la disposition des moyens de chauffage et de la chambre de post-chauffage tient compte de l'emplacement desdits déflecteurs.

Cette disposition particulière permet de tenir compte de la diminution de volume des grains sur le tapis. On conçoit en effet que par rapport à un bloc compact, les grains qui sont alimentés dans la trémie occupent un volume très important et que la redensification dans la première partie de la chambre de chauffage permet de diminuer de manière très conséquente ce volume. Il suffit alors de canaliser grâce aux déflecteurs les grains en cours de redensification pour les regrouper vers la zone médiane du tapis en sorte d'augmenter l'efficacité du chauffage et du post-chauffage, tout en évitant toute surconsommation énergétique.

Dans une variante de réalisation, le dispositif de l'invention peut comporter un ou plusieurs autres tapis transporteurs, également constitués d'une bande continue métallique réfléchissante, par exemple en fer blanc, le brin supérieur d'un tapis donné étant disposé à l'aplomb de la sortie de la zone médiane du tapis transporteur qui le précède, ledit tapis donné ayant une largeur inférieure à celui qui le précède. Compte tenu du regroupement des grains en cours de redensification dans la zone médiane du premier tapis précédent, il suffit que le suivant ait une largeur juste suffisante pour recueillir les grains situés à cet emplacement.

Ce ou ces autres tapis transporteurs traversent également une chambre de chauffage et une chambre de post-chauffage. Dans ce cas, avantageusement, les moyens de chauffage de la chambre de chauffage et le réflecteur de la chambre de post-chauffage sont disposés au-dessus d'un tapis donné selon la largeur de regroupement des grains sur ledit tapis ; de plus, les moyens de chauffage et le réflecteur peuvent être disposés à une hauteur différenciée d'un tapis à l'autre, tenant compte de la diminution en volume des grains. Il est donc ainsi possible d'optimiser au mieux l'énergie nécessaire à la redensification.

Un dernier tapis transporteur peut se situer hors de la dernière chambre de post-chauffage. La fonction de ce dernier tapis est d'une part de permettre un refroidissement des grains redensifiés permettant leur durcissement et d'autre part de servir de stock tampon avant leur évacuation et leur stockage. A cet effet, la vitesse de défilement du dernier tapis n'est absolument pas tributaire de celle du ou des tapis précédents et l'on peut donc avoir une accumulation plus importante de matières sur ce dernier tapis par une diminution relative de la vitesse de celui-ci.

La présente invention sera mieux comprise à la lecture de la description qui va être faite d'un exemple de réalisation du dispositif de redensification de grains de polystyrène avec tapis transporteur en fer blanc, illustré par le dessin annexé dans lequel :
La figure 1 est une représentation schématique en vue de côté d'un dispositif de redensification à deux tapis,
La figure 2 est une représentation schématique partielle du dispositif de la figure 1 en vue de dessus,
Les figures 3 et 4 sont des représentations schématiques partielles en vue de côté pour la figure 3 et en vue de dessus pour la figure 4 d'un dispositif de redensification à quatre tapis, et
La figure 5 est une représentation schématique en vue de côté d'un dispositif de redensification à plaque métallique vibrante.

Le dispositif de redensification selon l'invention concerne le traitement de matières thermoplastiques expansée dont la plus connue est le polystyrène. Elle concerne plus particulièrement le traitement des articles qui ont déjà été utilisés, notamment des boîtes moulées destinées à l'emballage. Ces boîtes ou caisses d'emballage sont de plus en plus fréquemment utilisées dans tous les secteurs d'activité, par exemple l'emballage de matériels du type électroménager ou informatique : dans ce cas l'emploi du polystyrène vise principalement à protéger les appareils contre les chocs lors de leur transport. Il peut s'agir également d'emballages pour des produits alimentaires, notamment les caisses utilisées par les mareyeurs pour le transport des poissons ou tout produit de la mer ; dans ce cas l'emploi du polystyrène vise à isoler les produits alimentaires contre les agressions extérieures et en particulier sert d'isolant thermique.

La densité des matériaux thermoplastiques expansés du type polystyrène, qui sont utilisés dans ce type d'emballage, est généralement de l'ordre de 0,01.

Après usage, se pose le problème de l'élimination ou du recyclage de ces emballages.

Par souci d'économie, on cherche le plus souvent à réutiliser les matières premières, notamment plastiques. Dans le cas présent, se pose alors le problème du transport de ces emballages déjà usagés jusqu'au lieu de retraitement, compte tenu de cette très faible densité.

Il est donc apparu judicieux d'effectuer dès que possible après la collecte un retraitement de redensification, visant à réduire le volume de ces emballages.

Le dispositif de l'invention répond à ce besoin. Il est cependant particulièrement adapté pour redensifier des matériaux thermoplastiques expansés, tels que le polystyrène, après que lesdits matériaux aient déjà subi un traitement de déchiquetage et de broyage des articles usagés proprement dits.

Ce déchiquetage et ce broyage ont pour but de transformer l'article en des grains, dont le volume, en moyenne serait de l'ordre de 1 à 2 cm³.

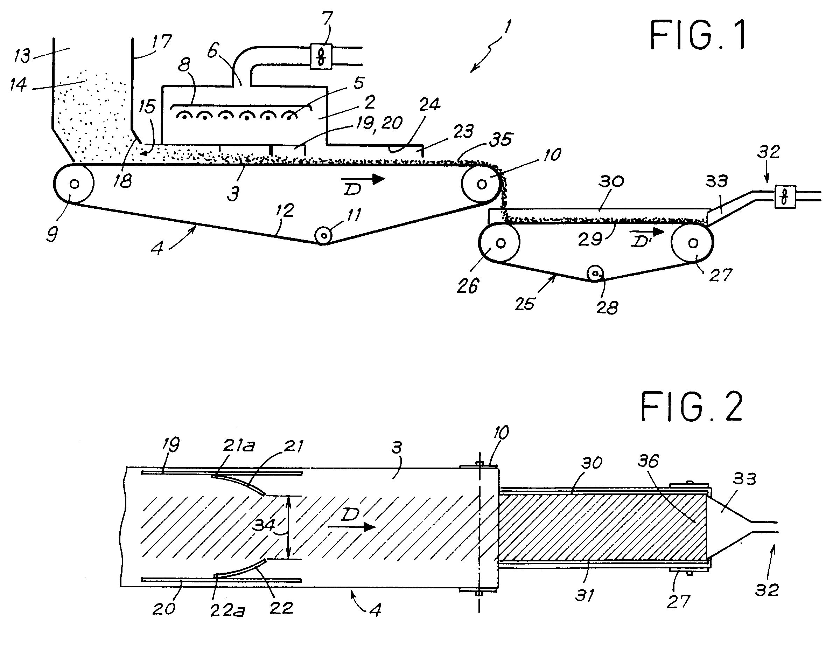

Le dispositif 1 de redensification à deux tapis, illustré aux figures 1 et 2, comporte une chambre de chauffage 2 qui est traversée par le brin supérieur 3 d'un tapis transporteur 4. Cette chambre de chauffage 2 est munie dans sa partie haute de lampes infrarouges 5, disposées au-dessus du brin supérieur 3 du tapis 4. Dans la représentation de la figure 1 les lampes infrarouges 5 sont disposées transversalement par rapport à la direction D du tapis 4 et à une même distance du brin supérieur 3. Cependant il est possible de disposer les lampes infrarouges 5 longitudinalement par rapport au tapis 4 et aussi à des distances différenciées, tenant compte de la diminution de volume des grains pendant la redensification.

La chambre de chauffage 2 comporte une ouverture 6 qui est raccordée à une installation 7 d'aspiration des vapeurs émises lors de la redensification. Un réflecteur 8 est disposé au-dessus des lampes infrarouges 5.

La chambre de chauffage 2 est prolongée par une chambre 23 de post-chauffage qui ne comporte pas de lampes infrarouges et qui a comme particularité d'avoir sa face supérieure 24 tournée vers le brin supérieur 3 du tapis 4 qui constitue un réflecteur. Cette face supérieure 24 est à une faible distance au-dessus du brin supérieur 3 du tapis 4. Le tapis 4 est constitué d'une bande continue métallique réfléchissante de faible épaisseur. Il s'agit en l'occurrence d'une tôle de fer blanc, qui est un acier doux recouvert d'étain, couramment utilisé dans la fabrication des boîtes de conserve.

Cette tôle est recourbée sur elle-même et rivetée à ses extrémités pour former une boucle sans fin. Cette tôle est également suffisamment souple pour pouvoir adopter la courbure des tambours 9, 10 autour desquels le tapis 4 est enroulé et tendu. En complément un rouleau de tension 11 vient s'appliquer sur le brin inférieur 12 du tapis 4. Ce rouleau permet d'exercer une tension adéquate et de corriger notamment les variations de longueur dues à la dilatation du tapis 4 lors du fonctionnement du dispositif.

En amont de la chambre de chauffage 2 est disposée une trémie 13 dans laquelle sont déversés les grains de polystyrène 14 sortant du broyage.

Cette trémie 13 à fond ouvert est disposée au-dessus de l'extrémité amont du brin supérieur 3 du tapis 4. Elle présente de plus une ouverture 15 d'alimentation des grains 14. Cette ouverture est délimitée par le montant avant 17 de la trémie 13, et plus particulièrement par son extrémité inférieure 18, qui de préférence est inclinée vers l'avant.

Au-dessus du brin supérieur 3 du tapis 4 et affleurant celui-ci, on a disposé deux flasques latéraux 19, 20 qui s'étendent, longitudinalement, depuis l'orifice 15 d'alimentation de la trémie 13. Chacun de ces flasques 19, 20 a une hauteur qui est supérieure ou au moins égale à la hauteur de l'orifice d'alimentation 15. Ces flasques ont pour effet de servir, avec le brin supérieur 3 du tapis 4, de contenant aux grains 14 lors de leur transport sur le tapis 4.

Deux déflecteurs 21, 22 sont disposés au-dessus du brin supérieur 3 du tapis 4, et affleurant celui-ci, dans l'intervalle entre les deux flasques 19, 20. Plus précisément chaque déflecteur 21, 22 a une extrémité 21a, 22a qui est solidaire du flasque correspondant, tandis que le déflecteur a globalement une direction oblique par rapport à la direction générale de déplacement du tapis, comme cela apparaît clairement sur la figure 2.

Le dispositif 1 de redensification comporte également un second tapis transporteur 25 qui est tout-à-fait similaire à celui 4 qui vient d'être décrit. Il s'agit également d'une tôle en fer blanc, rivetée à ses extrémités, qui est tendue entre deux tambours extrêmes 26, 27 et qui comporte un rouleau de tension 28.

Au-dessus du brin supérieur 29 du tapis 25 sont disposés longitudinalement deux flasques latéraux 30, 31. Le tambour d'entrée 26 de ce second tapis est positionné sensiblement sous le tambour 10 de sortie du premier tapis de telle sorte que le brin supérieur 29 de ce second tapis soit sensiblement à l'aplomb des grains redensifiés tombant du premier tapis 4.

Un système 32 d'évacuation est prévu au-dessus du tambour de sortie 27 du second tapis 25. Dans l'exemple illustré aux figures il s'agissait d'un système à aspiration avec une tête 33 d'aspiration dont l'orifice d'entrée couvrait toute la largeur comprise entre les deux flasques latéraux 30, 31.

Le fonctionnement du dispositif 1 de redensification de l'invention est le suivant. Les grains 14 déversés dans la trémie 13 sont, grâce au déplacement du tapis 4, entraîné par l'un des deux tambours 9, 10, alimentés sur le brin supérieur 3 du tapis 4. Plus précisément ces grains 14 se déplacent au sortir de l'ouverture d'alimentation 15 entre les deux flasques latéraux 19, 20 de manière homogène tant en largeur qu'en hauteur, la largeur étant déterminée par l'écartement entre les deux flasques latéraux 19 et 20 et la hauteur étant déterminée par le positionnement de l'extrémité inférieure 18 du montant 17 de la trémie 13 par rapport au brin supérieur 3 du tapis 4.

Il est à noter que l'orifice d'entrée de la chambre de chauffage 2 a sensiblement la même hauteur que l'ouverture d'alimentation 15 en sorte de limiter les déperditions éventuelles de chaleur, les grains entrant dans la chambre de chauffage 2 formant en quelque sorte joint d'étanchéité. Dans la chambre de chauffage 2, l'action des lampes infrarouges et le chauffage subséquent se traduit rapidement par une rétraction de chaque grain unitaire 14 et donc globalement du volume occupé par l'ensemble des grains 14 sur le brin supérieur 3 du tapis 4. On constate une diminution de la hauteur du tas formé par lesdits grains.

Lors de déplacement du brin supérieur 3 les grains qui arrivent au niveau des déflecteurs 21, 22 sont regroupés progressivement vers la zone médiane 34 définie par l'écartement entre les deux bords extrêmes des déflecteurs 21, 22.

On comprend que les lampes infrarouges 5 qui sont situées en amont des déflecteurs 21, 22 ont une longueur qui est au moins égale à l'écartement entre les deux flasques latéraux 19, 20, tandis que les lampes infrarouges 5 qui se trouvent au niveau puis en aval des déflecteurs 21, 22 peuvent avoir une longueur plus faible, en fonction du regroupement des grains à redensifier.

Pendant son passage dans la chambre de chauffage 2, la tôle constitutive du brin supérieur 3 du tapis 4 a été elle-même chauffée sous l'action des lampes infrarouges. L'énergie accumulée est mise à profit pour poursuivre l'action de redensification dans la chambre de post-chauffage 23. La face inférieure 24, de la paroi servant de plafond à la chambre de post-chauffage 23, sert de réflecteur pour minimiser les pertes énergétiques et accroître l'effet de restitution de chaleur de la tôle constitutive du brin supérieur 3 du tapis 4.

A la sortie de la chambre de post-chauffage 23, les grains redensifiés 35 ont une densité qui est de l'ordre de 0,1 à 0,15.

Il est remarquable que , même en cas de fusion légère des grains lors de leur passage dans les chambres de chauffage 2 et de post-chauffage 23, les grains 35 n'adhèrent pas sensiblement sur la surface du brin supérieur 3 du tapis 4.

Les grains redensifiés 35 tombent par gravité, au-delà du tambour de sortie 10 du premier tapis 4 sur le brin supérieur 29 du second tapis 25, entre les flasques latéraux 30,31.

Ils sont entraînés, à une vitesse éventuellement inférieure à celle du premier tapis 4 dans la direction de la flèche D'. Eventuellement ils passent sous des buses d'air, visant à accélérer le refroidissement des grains, permettant un durcissement complet et leur manipulation.

Au niveau du tambour de sortie 27 du second tapis transporteur 25 les grains 36 redensifiés et refroidis sont collectés et évacués par le système d'évacuation 32, notamment par aspiration pour être par exemple ensachés.

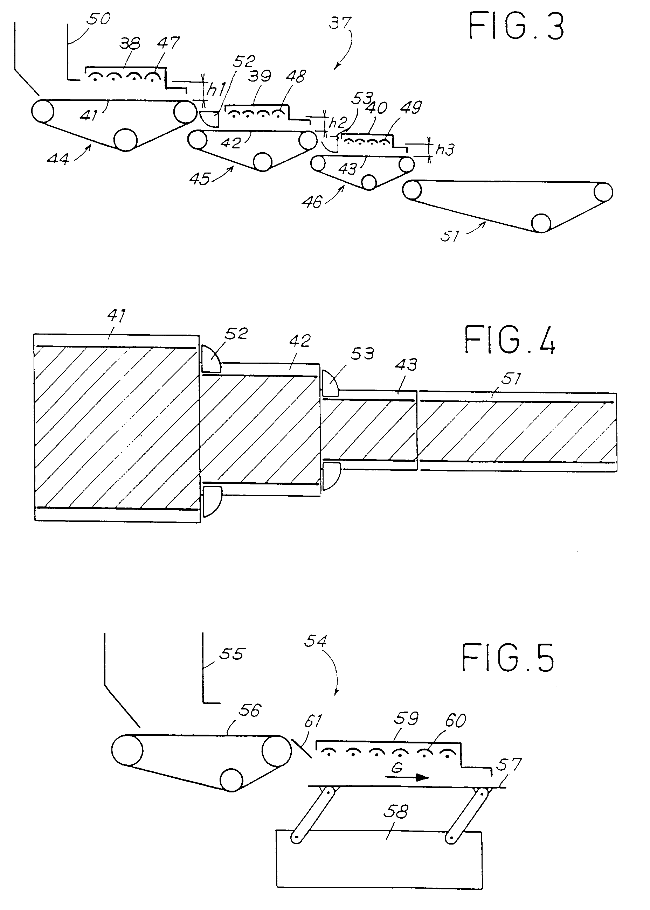

Le dispositif 37 de redensification à quatre tapis, illustré aux figures 3 et 4, comporte une succession de trois ensembles 38, 39, 40 comprenant une chambre de chauffage suivie d'une chambre de post-chauffage. Ces trois ensembles sont traversés par le brin supérieur 41, 42, 43 des trois tapis transporteurs 44, 45, 46. Chaque chambre de chauffage des trois ensembles 38, 39, 40 est munie dans sa partie haute de lampes à infrarouge 47, 48, 49, qui sont disposées au-dessus du brin supérieur correspondant à une hauteur respectivement h1, h2, h3.

L'alimentation en grains par trémie 50, ainsi que l'évacuation des grains redensifiés chauds à l'aide d'un tapis complémentaire 51, sont identiques à celles qui viennent d'être décrites dans le dispositif 1 à deux tapis.

La différence entre ces deux variantes est constituée par une optimisation maximale d'une part de l'énergie mise en oeuvre pour la redensification des grains et d'autre part de l'encombrement du dispositif.

Cette optimisation est basée sur la diminution de volume des grains tout au long de la redensification. Elle consiste à décomposer le traitement réalisé dans un ensemble constitué d'une chambre de chauffage et d'une chambre de post-chauffage tel que celui décrit dans le dispositif 1 en trois ensembles successifs 38, 39 , 40 de plus faible volume, en ce que d'une part chaque ensemble donné 39, 40 a une largeur plus faible que l'ensemble 38, 39 qui le précède et en ce que d'autre part les lampes infrarouges 48, 49 d'un ensemble donné 39, 40 sont à une hauteur h2, h3 inférieure à celles h1, h2 de l'ensemble qui le précède.

Ceci peut être obtenu en décalant en hauteur les ensembles successifs et en les faisant traverser par trois tapis transporteurs 44, 45, 46 dont l'extrémité amont du brin supérieur 42, 43 d'un ensemble 39, 40 donné se trouvant à l'aplomb de l'extrémité aval du brin supérieur 41, 42 du tapis transporteur 44, 45 de l'ensemble qui le précède 38, 39. Dans cette zone de passage des grains en cours de redensification, d'un tapis à l'autre, on a disposé des gouttières de recentrage 52, 53, dont le rôle est de canaliser les grains tombant du brin supérieur d'un tapis à l'autre de manière à les collecter sur une largeur plus faible, comme cela apparaît très clairement à l'examen de la figure 4.

Le dispositif 54 illustré à la figure 5 est un dispositif à plaque vibrante. Il comporte une trémie 55 et un tapis d'alimentation 56, ainsi qu'une plaque métallique 57 pour entraîner en vibration à l'aide d'un système de mise en vibration 58.

La structure et le rôle de la trémie 55 et du tapis d'alimentation 56 sont identiques à ce qui a été décrit dans le dispositif 1 à deux tapis pour la trémie 13 et le tapis transporteur 4 pour ce qui est de la sortie située en amont de la chambre de chauffage 2. La plaque vibrante 3 est une plaque métallique rigide, à surface réfléchissante, du moins en ce qui concerne sa face supérieure qui est tournée vers l'ensemble 59 constitué d'une chambre de chauffage, équipée dans sa partie haute de lampes infrarouges 60, et d'une chambre de post-chauffage.

Le fonctionnement du dispositif 54 à plaque vibrante est le suivant. Les grains accumulés dans la trémie 55 sont alimentés lors du déplacement du tapis 56 jusqu'à parvenir à l'aplomb de la partie amont de la plaque vibrante 57. Latéralement, une gouttière 61 permet de canaliser les grains, tombant du tapis d'alimentation 56, sur la plaque vibrante 57. Sous l'action des vibrations, les grains se déplacent sur la plaque 57, dans le sens de la flèche G, traversant la chambre de chauffage et la chambre de post-chauffage. Pendant cette traversée, les grains sont redensifiés. Eventuellement la plaque 57 a une inclinaison facilitant le déplacement des grains lors de la mise en vibration.

La présente invention n'est pas limitée aux modes de réalisation qui viennent d'être décrits à titre d'exemples non exhaustifs. En particulier, même si les dispositifs décrits sont spécialement adaptés pour la redensification des matières thermoplastiques expansées sous forme granulaire, cette utilisation n'est cependant pas exclusive.

De plus s'agissant de tapis transporteurs, il serait possible de mettre en oeuvre d'autres tôles métalliques que le fer blanc, pour autant qu'elles remplissent les caractéristiques requises pour l'invention, à savoir de pouvoir constituer un tapis transporteur en boucle, d'être réfléchissantes et de pouvoir accumuler de la chaleur.

## Revendications

1. Dispositif de redensification d'articles en matière thermoplastique expansée, notamment polystyrène, comprenant une chambre de chauffage (2), un système de transport des articles à travers la chambre de chauffage, ainsi que des moyens de chauffage infrarouge (5) disposés dans la chambre de chauffage (2) en regard dudit système de transport caractérisé en ce que, le système de transport comportant une surface métallique réfléchissante sur laquelle se déplacent les articles, il comporte, de plus, une chambre de post-chauffage (23), qui est exempte de moyens de chauffage infrarouge, mais qui comporte un réflecteur (24) disposé au-dessus de et tourné vers la surface métallique réfléchissante du système de transport.

2. Dispositif selon la revendication 1 caractérisé en ce que le système de transport comporte un tapis transporteur (4) constitué à partir d'une fine bande continue métallique réfléchissante, suffisamment flexible pour pouvoir être tendue, sous forme d'une boucle, entre différents tambours et entraînée en rotation.

3. Dispositif selon la revendication 2 caractérisé en ce que la bande constitutive du tapis transporteur (4) est une tôle fine en acier doux recouverte d'étain, couramment désigné sous la dénomination fer blanc.

4. Dispositif selon l'une des revendications 2 ou 3 caractérisé en ce que la mise en forme de boucle continue de la bande métallique est obtenue par recouvrement des deux extrémités libres de cette bande et rivetage des bords superposés.

5. Dispositif selon la revendication 1 caractérisé en ce que le système de transport comporte une plaque métallique à surface réfléchissante et des moyens de mise en vibration de ladite plaque, aptes à faire se déplacer les articles sur la plaque à travers la chambre de chauffage et la chambre de post-chauffage.

6. Dispositif selon les revendications 1à 5 pour la redensification d'articles en résine thermoplastique expansée à l'état granulaire, caractérisé en ce qu'il comporte en amont de la chambre de chauffage (2),un tapis d'alimentation et une trémie (13) qui est ouverte sur ledit tapis, et qui présente une ouverture contrôlée d'alimentation (15), régulant le volume de grains (14) véhiculé sur le tapis d'alimentation, et en ce qu'il comporte des flasques latéraux (19, 20) disposés au-dessus du tapis d'alimentation et affleurant celui-ci depuis l'ouverture d'alimentation (15) de la trémie (13).

7. Dispositif selon l'une des revendications 1 à 6 caractérisé en ce qu'il comporte des déflecteurs (21;22) disposés au-dessus de la surface métallique (4) et affleurant celle-ci, dirigés obliquement depuis son bord extérieur vers sa zone médiane, de manière à regrouper les grains en cours de redensification vers ladite zone médiane au cours de leur déplacement, la disposition des moyens de chauffage (2) et de la chambre de post-chauffage (23) tenant compte de l'emplacement desdits déflecteurs (21,22).

8. Dispositif selon la revendication 7 caractérisé en ce qu'il comporte un ou plusieurs autres tapis transporteurs (25), chacun étant constitué d'une bande continue métallique réfléchissante, dont le brin supérieur (29) est disposé à l'aplomb de la sortie de la zone médiane (34) du tapis transporteur (4) qui le précède, et qui a une largeur inférieure à celle du tapis qui le précède.

9. Dispositif selon la revendication 8 caractérisé en ce que s'agissant de tapis situés dans la chambre de chauffage, des moyens de chauffage sont disposés au-dessus d'un tapis donné à une hauteur différenciée, d'un tapis à l'autre, qui tient compte de la diminution du volume des articles en cours de redensification.

## Claims

1. Device for the recompaction of articles made of expanded thermoplastic, especially polystyrene, comprising a heating chamber (2), a system for transporting the articles through the heating chamber, and infrared heating means (5) arranged in the heating chamber (2) opposite the said transport system, characterized in that, the transport system having a reflective metal surface along which the articles move, it has, in addition, a postheating chamber (23) which has no infrared heating means but which has a reflector (24) arranged above and facing the reflective metal surface of the transport system.

2. Device according to Claim 1, characterized in that the transport system includes a conveyor belt (4) consisting of a continuous thin reflective metal sheet which is sufficiently flexible to be able to be stretched, in the form of a loop, between various drums and driven in rotation.

3. Device according to Claim 2, characterized in that the sheet of which the conveyor belt (4) is composed is a thin mild steel sheet coated with tin, commonly called tinplate.

4. Device according to either of Claims 2 and 3, characterized in that the continuous loop is formed from the metal sheet by overlapping the two free ends of this sheet and riveting the superposed edges.

5. Device according to Claim 1, characterized in that the transport system includes a metal plate having a reflective surface and means for vibrating the said plate which are capable of making the articles move along the plate through the heating chamber and the postheating chamber.

6. Device according to Claims 1 to 5 for the recompaction of articles made of expanded thermoplastic resin in a particulate state, characterized in that it has, upstream of the heating chamber (2), a feed belt and a hopper (13) which opens onto the said belt and has a controlled feed opening (15) which regulates the volume of particles (14) which is conveyed on the feed belt and in that it has lateral cheek-plates (19, 20) arranged above the feed belt and flush with the latter, starting from the feed opening (15) of the hopper (13).

7. Device according to one of Claims 1 to 6, characterized in that it includes deflectors (21, 22) arranged above the metal surface (4) and flush with the latter, these being directed obliquely from its outer edge to its central edge so that the particles undergoing recompaction are collected in the said central region during their movement, the arrangement of the heating means (2) and of the postheating chamber (23) taking the position of the said deflectors (21, 22) into account.

8. Device according to Claim 7, characterized in that it includes one or more other conveyor belts (25), each consisting of a continuous reflective metal sheet, the upper run (29) of which lies vertically below the outlet of the central region (34) of the conveyor belt (4) which precedes it, and having a smaller width than the belt which precedes it.

9. Device according to Claim 8, characterized in that, with regard to the belts located in the heating chamber, heating means are arranged above a given belt at a height which differs from one belt to another and which takes into account the reduction in volume of the articles undergoing recompaction.

## Patentansprüche

1. Vorrichtung zur Verdichtung von Erzeugnissen aus expandiertem thermoplastischen Material, insbesondere Polystyrol, die umfaßt:
- eine Heizkammer (2),
- ein Transportsystem zur Förderung der Erzeugnisse durch die Heizkammer sowie
- eine Vorrichtung zur Infrarot-Erwärmung (5), die in der Heizkammer (2) diesem Transportsystem gegenüberliegend angeordnet ist,
dadurch gekennzeichnet, daß
das Transportsystem eine reflektierende Metalloberfläche, auf der die Erzeugnisse gefördert werden, und außerdem eine Nachheizkammer (23) aufweist, die keine Vorrichtung zur Infrarot-Erwärmung, aber einen über der reflektierenden Metalloberfläche des Transportsystems angeordneten und dieser zugewandten Reflektor (24) aufweist.

2. Vorrichtung nach Anspruch 1, dadurch gekennzeichnet, daß das Transportsystem ein Förderband (4) aufweist, das aus einem dünnen metallischen, reflektierenden, endlosen Band besteht, welches ausreichend flexibel ist, um in Form eines Gurts um mehrere Trommeln herum gespannt und in eine Drehbewegung versetzt zu werden.

3. Vorrichtung nach Anspruch 2, dadurch gekennzeichnet, daß das Band, welches das Förderband (4) bildet, ein dünnes Blech aus weichem, zinnbeschichtetem Stahl ist, der üblicherweise als Weißblech bezeichnet wird.

4. Vorrichtung nach Anspruch 2 oder 3, dadurch gekennzeichnet, daß das Metallband durch Übereinanderlegen der beiden freien Enden dieses Bandes und Vernieten der übereinandergelegten Enden in die Form eines kontinuierlichen Gurts gebracht wird.

5. Vorrichtung nach Anspruch 1, dadurch gekennzeichnet, daß das Transportsystem eine Metallplatte mit reflektierender Oberfläche und eine Vorrichtung umfaßt, mit der diese Platte in Schwingung versetzt werden kann, wodurch die auf der Platte befindlichen Erzeugnisse durch die Heizkammer und die Nachheizkammer gefördert werden.

6. Vorrichtung nach einem der Ansprüche 1 bis 5 zur Verdichtung von Erzeugnissen aus expandiertem thermoplastischen Harz in Granulatform, dadurch gekennzeichnet, daß sie vor der Heizkammer (2) ein Zufuhrband und einen Vorratsbehälter (13) aufweist, der zu diesem Zufuhrband hin geöffnet ist und eine steuerbare Zufuhröffnung (15) aufweist, über die das auf das Zufuhrband gegebene Volumen an Granulatkörnern (14) reguliert wird, und daß sie zwei seitliche Blenden (19,20) aufweist, die über dem Zufuhrband angebracht sind und die mit diesem von der Zufuhröffnung (15) des Vorratsbehälters (13) an bündig abschließen.

7. Vorrichtung nach einem der Anspruche 1 bis 6, dadurch gekennzeichnet, daß sie Ablenkplatten (21,22) aufweist, die über der Metalloberfläche (4) angebracht sind und mit dieser bündig abschließen und die vom äußeren Rand zum mittleren Bereich hin schräg ausgerichtet sind, so daß die Körner im Laufe ihrer Verdichtung und während der Förderung im mittleren Bereich zusammengeführt werden, wobei die Anordnung dieser Ablenkplatten (21, 22) bei der Anordnung der Heizvorrichtung (2) und der Nachheizkammer (23) berücksichtigt wird.

8. Vorrichtung nach Anspruch 7, dadurch gekennzeichnet, daß sie ein oder mehrere weitere Förderbänder (25) umfaßt, die jeweils aus einem reflektierenden metallischen, endlosen Band bestehen, dessen Obergurt (29) jeweils senkrecht unter dem Auslaßbereich des mittleren Bereichs (34) des vorangehenden Förderbandes (4) angebracht ist und der jeweils eine geringere Breite aufweist als das vorangehende Förderband.

9. Vorrichtung nach Anspruch 8, dadurch gekennzeichnet, daß die Heizvorrichtung, die vorhanden ist, da sich die Bänder in einer Heizkammer befinden, oberhalb eines gegebenen Bandes von Band zu Band in einer unterschiedlichen Höhe, mit der das im Laufe der Verdichtung abnehmende Volumen der Erzeugnisse berücksichtigt wird, angeordnet ist.
